# EUROPEAN PATENT APPLICATION

(11) **EP 1 515 513 A1**
(43) Date of publication of application: **16.03.2005**
(21) Application number: 04021557.6
(22) Date of filing: 10.09.2004
(51) Int. Cl.: H04L 29/06

(54) **System and method for real-time data distribution using UDP**

(30) Priority: 12.09.2003 JP 2003320531
(71) Applicant: NEC CORPORATION, Tokyo (JP)
(72) Inventor: Oosawa, Yumiko, Minato-ku, Tokyo (JP); Kido, Hitoshi, Minato-ku, Tokyo (JP)
(74) Representative: VOSSIUS & PARTNER

(57) **Abstract**

A data distribution system is composed of a server (1, 5), a data distribution apparatus (4, 6) (4, 6), and a receiving node (3), which are connected one another through a mobile packet network (100). In this system, UDP (user datagram protocol) is used for data distribution from the data distribution apparatus (4, 6) to the receiving node (3). The receiving node (3) includes means for sending UDP port information to the server (1, 5) when a connection is established between the receiving node (3) and the data distribution apparatus (4, 6) through the server (1, 5) over the mobile packet network (100), the UDP port information being representative of a UDP port used for the data distribution. The server (1, 5) includes means for performing real-time transfer of data received from the data distribution apparatus (4, 6) to the receiving node (3) using the UDP port.

## Description

The present invention is related to data distribution over networks, more particularly, data distribution to receiving nodes connected to mobile packet networks.

Recent development in information technology devices provides mobile communication terminals with environments for receiving various image data, including still and moving images. Recent enhancement of mobile packet telecommunication networks, for instance, addresses distribution of moving picture data for cellular phones.

The packet telecommunication for the second-generation mobile communications system is achieved by PDC-P (Personal Digital Cellular-Packet), CDPD (cellular Digital Packet Data), and GPRS (General Packet Radio Service). Additionally, the packet telecommunication for third-generation mobile communications system, such as IMT-2000 (International Mobile Telecommunications), is achieved by PDSN/PDGN (Packet Data Service Node / Packet Data Gateway Node).

One proposed method for distributing image data over such packet telecommunication networks involves using an image data storage server which provides desired image data for the requesting terminal in response to a request therefrom. JP-A-P2001-257868
and JP-A-P2003-37836, for example, disclose systems for image data distribution for a cellular phone. In these systems, a gateway server is connected to the cellular phone network for providing connections between the cellular phone and the image distribution server through the Internet or a dedicated network. Desired image data is distributed from the image distribution server to the cellular phone through the gateway server.

Conventional mobile packet communications systems use dynamically assigned IP addresses for identifying the destinations for providing image data distribution services; desired image data is distributed to the destination identified by the associated IP address.

Such packet communications systems are not suitable for real-time data exchange between the network nodes, because the use of IP addresses for identifying the destinations necessitates intermediate data storage servers for temporally storing data to be exchanged.

For video distribution from a network camera connected to a conventional mobile packet network to a desired terminal, for example, the image data obtained by the network camera is necessarily stored in an intermediate image storage server; the image data has to be transferred through the intermediate image storage server to the desired terminal.

There is a need for providing an improved system for real-time data transfer over mobile packet communication networks.

Therefore, an object of the present invention is to provide an improved data distribution system for achieving real-time data transfer over a mobile packet communication network without an intermediate data storage server.

In an aspect of the present invention, a data distribution system is composed of a server, a data distribution apparatus, and a receiving node, which are connected one another through a mobile packet network. In this system, UDP (user datagram protocol) is used for data distribution from the data distribution apparatus to the receiving node. The receiving node includes means for sending UDP port information to the server, when a connection is established between the receiving node and the data distribution apparatus through the server over the mobile packet network, the UDP port information being representative of a UDP port used for the data distribution. The server includes means for performing real-time transfer of data received from the data distribution apparatus to the receiving node using the UDP port.

In a preferred embodiment, the receiving node repeatedly sends the UDP port information to the server until the receiving node receives the data from the data distribution apparatus.

It is also preferable that the receiving node repeatedly sends the UDP port information to the server after starting to receive the data from the data distribution apparatus.

In a preferred embodiment, the server includes means for forwarding a distribution request from the receiving node to the data distribution apparatus through a message transfer medium which is designed to transfer a message using a telephone number of the data distribution apparatus as a destination identifier, and the server provides a connection between the data distribution apparatus and the receiving node, and thereby achieves real-time distribution of data from the data distribution apparatus to the receiving node therethrough in response to the distribution request.

The message transfer medium is preferably selected out of a group consisting of SMS (short message service), MMS (multimedia messaging service), and an e-mail service.

It is also preferable that the data distribution apparatus includes means for analyzing the message to obtain address information associated with the server, and the data distribution apparatus establishes a connection to the server through the mobile packet network using the address information. The address information preferably includes a global IP address of the server.

In a preferred embodiment, user authentication of a user of the receiving node is achieved by using a user ID and a password previously provided for the receiving node by the server.

The data distribution apparatus may provide the receiving node with data selected out of a group consisting of video data, still image data, audio data, measured data, and text data.

In another aspect of the present invention, a server is used for data distribution using UDP from a data distribution apparatus to a receiving node over a mobile packet network. The server is composed of: means for receiving UDP port information from the receiving node, the UDP port information being representative of a UDP port used for the data distribution apparatus; and means for performing real-time transfer of data received from the data distribution apparatus to the receiving node using the UDP port, when a connection is established between the data distribution apparatus and the receiving node through the server over the mobile packet network.

In still another aspect of the present invention, a receiving node is designed to receive data which is real-time transmitted using UDP from a data distribution apparatus through a server over a mobile packet network. The receiving node is composed of UDP informing means for sending UDP port information to the server, when a connection through the server between the data distribution apparatus and the receiving node is established over the mobile packet network, the UDP port information being representative of a UDP port used for real-time transmitting of the data.

In still another aspect of the present invention, a method is provided for data distribution using UDP from a data distribution apparatus to a receiving node over a mobile packet network, the method comprising:
establishing a connection from the data distribution apparatus to the receiving node through a server; and
transmitting UDP port information to the server in response to the connection being established, the UDP port information being representative of a UPD port used for the data distribution; and
performing real-time data distribution from the data distribution apparatus to the receiving node using the UDP port.

In still another aspect of the present invention, a computer readable medium contains a program for instructing a server used for data distribution using UDP between a data distribution apparatus and a receiving node over a mobile packet network, to implement the steps of:
receiving UDP port information from the receiving node, the UDP port information being representative of a UDP port used for the data distribution apparatus,
performing real-time transfer of data received from the data distribution apparatus to the receiving node using the UDP port, when a connection is established between the data distribution apparatus and the receiving node through the server over the mobile packet network.

In still another aspect of the present invention, a computer readable medium contains a program for instructing a receiving node receiving data real-time transmitted using UDP from a data distribution apparatus through a server over a mobile packet network, to implement the step of sending UDP port information to the server, when a connection through the server between the data distribution apparatus and the receiving node is established over the mobile packet network, the UDP port information being representative of a UDP port used for real-time transmitting of the data.

Preferred embodiments of the present invention will be described below in details with reference to the attached drawings.
Fig. 1 is a block diagram illustrating an exemplary structure of a data distribution system in accordance with the present invention;
Fig. 2 is a block diagram illustrating an exemplary structure of a server provided within the data distribution system;
Fig. 3 is a block diagram illustrating an exemplary structure of a receiving node provided within the data distribution system;
Fig. 4 is a block diagram illustrating an exemplary structure of a data distribution apparatus provided within the data distribution system;
Fig. 5 is a block diagram illustrating an exemplary structure of a video distribution system in a preferred embodiment;
Fig. 6 is a block diagram illustrating an exemplary structure of a receiving node provided within the video distribution system;
Fig. 7 is a block diagram illustrating an exemplary structure of a video distribution apparatus provided within the video distribution system; and
Figs. 8A and 8B are a sequence chart illustrating an exemplary operation of the video distribution system.

### System Structure

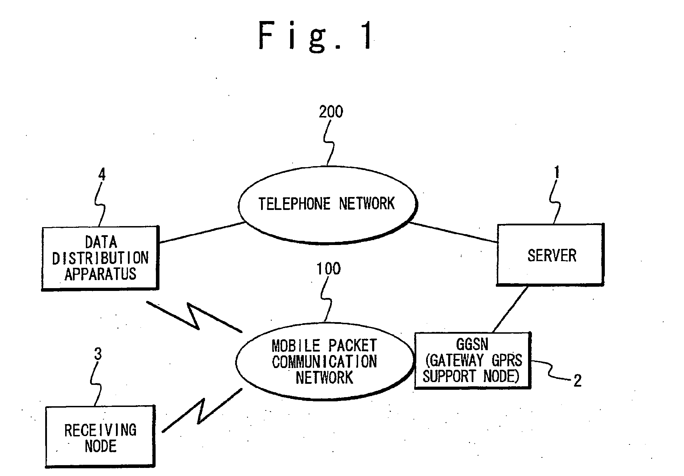

Fig. 1 is a block diagram illustrating the structure of a data distribution system in one embodiment of the present invention. The data distribution system is composed of a server 1, a GGSN (gateway GPRS support node) 2, a receiving node 3, and a data distribution apparatus 4.

The server 1 is connected to a mobile packet network 100 through the GGSN 2, and also connected to a telephone network 200; the telephone network 200 may be a wireless telephone network or a wired telephone network. The server 1 may be directly connected to the GGSN 2 or indirectly connected to the GGSN 2 through the Internet.

The receiving node 3 is designed to be wirelessly connectable to the mobile packet network 100. The receiving node 3 may include a desktop personal computer, a mobile PDA (personal digital assistant), or a cellular phone.

The data distribution apparatus 4 is designed to be connectable to both of the mobile packet network 100 and the telephone network 200. data distribution apparatus 4 is configured to distribute various data, such as image data, audio data, measured data, and text data.

In this embodiment, identification of the receiving node 3 and the data distribution apparatus 4 are achieved using two identifiers: one is a telephone number, and another is an IP address. When the receiving node 3 and the data distribution apparatus 4 are connected to the mobile packet network 100, the GGSN 2 dynamically assigns IP addresses to the receiving node 3 and the data distribution apparatus 4. Additionally, telephone numbers are assigned to the receiving node 3 and the data distribution apparatus 4 by the administrator of the telephone network 200.

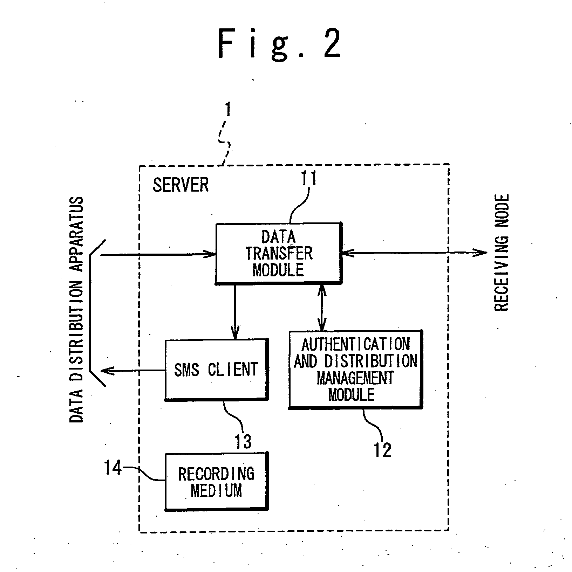

Fig. 2 is a block diagram illustrating an exemplary structure of the server 1. The server 1 is composed of a data transfer module 11, a authentication and distribution management module 12, an SMS (short message service) client 13, and a recording medium 14. The data transfer module 11 transfers data to be distributed from the data distribution apparatus 4 to the receiving node 3. The authentication and distribution management module 12 achieves management of the data distribution from the data distribution apparatus 4, including the user authentication. The SMS client 13 is used for sending SMS messages. The recording medium 14 contains a computer readable program to be executed by the server 1; the server 1 is operated in accordance with the program stored in the recording medium 14.

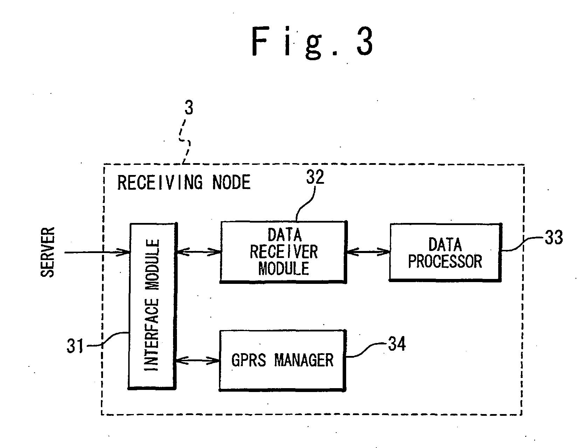

Fig. 3 is a block diagram illustrating an exemplary structure of the receiving node 3. The receiving node 3 includes an interface module 31, a data receiver module 32, a data processor 33, and a GRRS manager 34. The interface module 31 transmits and receives packets through the mobile packet network 100. The data receiver 32 decapsulates the received packets to obtain user data. The data processor 33 performs data processing on the obtained user data, such as audio-video data decoding. The GPRS manager 34 is used for establishing connections to the mobile packet network 100, and for eliminating the established connections.

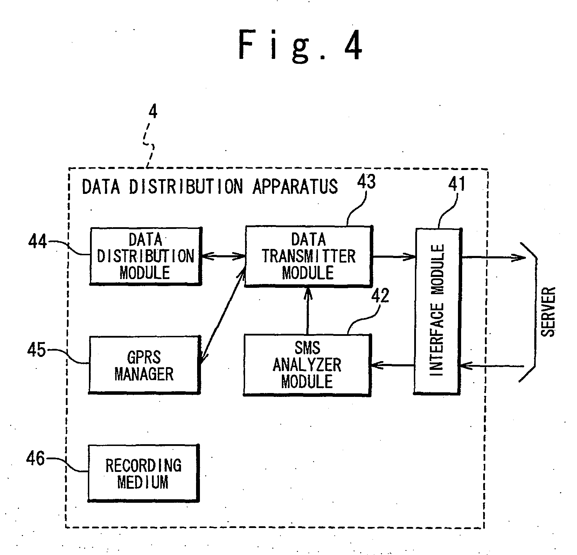

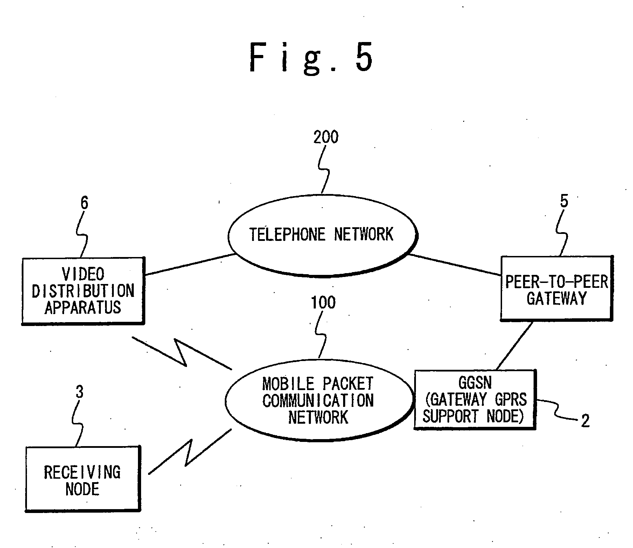

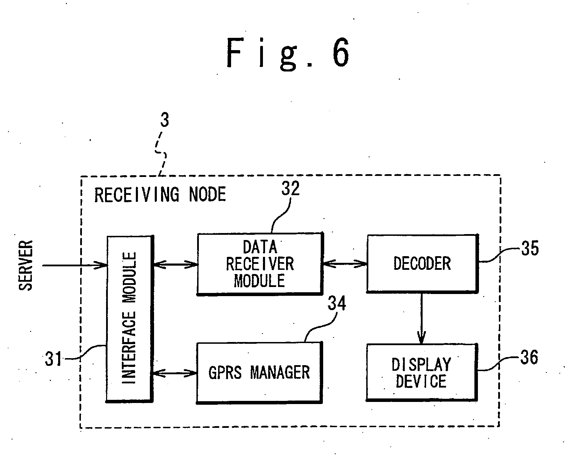

Fig. 4 is a block diagram illustrating an exemplary structure of the data distribution apparatus 4. The data distribution apparatus 4 is composed of an interface module 41, an SMS analyzer module 42, a data transmitter module 43, a data distribution module 44, a GPRS manager 45, and a recording medium 46. The interface module 41 transmits and receives data through the mobile packet network 100 and the telephone network 200, including SMS messages. The SMS analyzer module 42 analyzes the SMS messages received through the telephone network 200. The data transmitter module 43 forward data received from the data distribution module 44 to the server 1. The data distribution module 44 is a data storage device storing data to be distributed to the receiving node 3. The stored data may include video/audio data, measured data, or text data. The GPRS manager 45 is used for establishing connections to the mobile packet network 100, and for eliminating the established connections. The recording medium 46 contains a computer readable program to be executed by the data distribution apparatus 4; the data distribution apparatus 4 is operated in accordance with the program stored in the recording medium 46.

### System Operation

With reference to Figs. 1 to 4, an exemplary operation of the data distribution system in this embodiment will be described below.

With reference to Fig. 1, the operation of the data distribution system involves establishing a peer-to-peer connection between the receiving node 3 and the data distribution apparatus 4 through the server 1 in response to a request issued by the receiving node 3; the established peer-to-peer connection is used for data distribution from the data distribution apparatus 4 to the receiving node 3.

In advance of the establishment of the peer-to-peer connection between the receiving node 3 and the data distribution apparatus 4, the telephone numbers of the receiving node 3 and the data distribution apparatus 4 are registered with the server 1. The server 1 generates a user ID and a password associated with the telephone number of the receiving node 3. The user ID and the password are forwarded to the user by mail or other media.

The user desiring the data distribution service is requested to connect the receiving node 3 to the server 1 through the mobile packet network 100 and the GGSN 2. The receiving node 3 uses the global IP address previously assigned to the server 1 for establishing the connection to the server 1.

After establishing the connection between the receiving node 3 and the server 1, the user is prompted to input the user ID and the password into the receiving node 3. Upon receiving the user ID and the password, the receiving node 3 forwards a distribution request including the user ID and the password to the server 1. The authentication and distribution management module 12 within the server 1 authenticates the user with the user ID and the password. When the user is successfully authenticated, the distribution management module 12 retrieves the registered telephone numbers associated with the receiving node 3 and the data distribution apparatus 4.

The SMS client 13 within the server 1 encapsulates the distribution request into an SMS message, and sends the SMS message to the data distribution apparatus 4 using the retrieved telephone numbers; the destination of the SMS message, that is, the data distribution apparatus 4, is identified by the associated telephone number within the SMS message. The content of the SMS message includes the global IP address of the server 1.

Upon receiving the SMS message from the server 1, the data distribution apparatus 4 stores the received SMS message into a file prepared in a storage device, and analyses the SMS message using the SMS analyzer module 42 to obtain the encapsulated distribution request and the global IP address of the server 1. The data distribution apparatus 4 then establishes a connection with the server 1 using the obtained global IP address through the mobile packet network 100 and the GGSN 2. After establishing the connection with the server 1, the data distribution apparatus 4 issues a distribution acknowledgement to the server 1.

In response to the distribution acknowledgment received from the data distribution apparatus 4, the server 1 sends a distribution start notification to the receiving node 3. After sending distribution start notification, the data transfer module 11 then starts to transfer the data received from the data distribution apparatus 4 to the receiving node 3 using the information stored in the distribution management module 12. This effectively achieves a peer-to-peer connection between the receiving node 3 and the data distribution apparatus 4 through the server 1 over the mobile packet network 100.

Different protocols are used for the communications between the receiving node 3 and the data distribution apparatus 4. TCP (Transmission Control Protocol) is used for exchanging control signals (or control data) for establishing the peer-to-peer connection between the receiving node 3 and the data distribution apparatus 4. On the other hand, UDP (User_ Datagram Protocol) is used for data distribution, including video/audio data, measured data, and text data, from the data distribution apparatus 4. This configuration addresses improvement of the data transmission rate in data distribution; the use of UDP is preferable for achieving high data transmission rate.

The GGSN 2 acknowledges that TCP is used for exchanging signals between the server 1 and the receiving node 3 when establishing the connection between the server 1 and the receiving node 3; however, the GGSN 2 may block the data distribution using UDP from the data distribution apparatus 4 to the receiving node 3, because the GGSN 2 does not acknowledges the UDP-based data distribution.

In order to avoid the UDP-based data distribution being blocked by the GGSN 2, the receiving node 3 sends UDP port information to the server 1 through the GGSN 2 for informing the UDP port used for the data distribution. This effectively allows the GGSN 2 to acknowledge the UDP-based data distribution, and thereby achieves the data distribution from the data distribution apparatus 4 to the receiving node 3 using UDP.

Specifically, the receiving node 3 is designed to be responsive to the distribution start notification for transmitting the UDP port information to the server 1. The UDP port information is repeatedly transmitted to the server 1 at constant time intervals until the receiving node 3 receives the data to be distributed thereto from the data distribution apparatus 4. Repeated transmission of the UDP port information is important because the GGSN 2 automatically closes the UDP port when not accessed by the receiving node 3.

As described above, the data distribution system in this embodiment effectively achieves real-time data distribution of desired data, which may include video/audio data, measured data, or text data, over the mobile packet network 100. One advantage of the data distribution system is that this system does not require a dedicated communication network; the data distribution system in this embodiment only uses existing networks, including the mobile packet network 100 and the telephone network 200. This is advantageous for reducing the cost. Such feature is preferable for video streaming and remote monitoring using PDAs and cellular phones.

Additionally, the video distribution system in this embodiment allows the data distribution using UDP from the data distribution apparatus 4 to the receiving node 3. This effectively improves the data transmission rate, and thereby promotes the real-time data transfer.

### Preferred Application

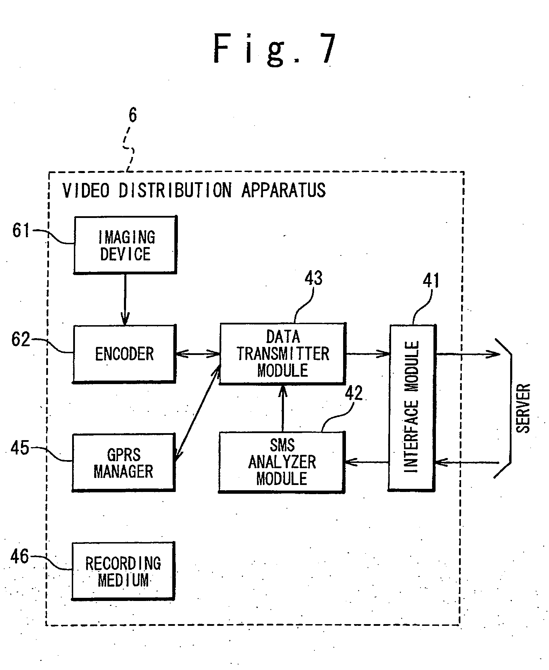

The aforementioned data distribution architecture is preferably applied to a video distribution system. In one embodiment, as shown in Fig. 5, the video distribution system uses a peer-to-peer gateway as the server 1, and a video distribution apparatus as the data distribution apparatus 4. In Fig. 5, the peer-to-peer gateway is denoted by numeral 5, and the video distribution apparatus is denoted by numeral 6. The configuration of the peer-to-peer gateway 5 is basically identical to that of the server 1.

With reference to Fig. 6, the configuration of the receiving node 3 is slightly modified from the configuration shown in Fig. 3. The receiving node 3 uses a decoder as the data processor 33, and additionally includes a display device 36; the decoder is denoted by numeral 35 in Fig. 6.

The decoder 35 decodes video data received by the data receiver module 32, and displays video images on the display device 36 in response to the decoded video data. When the receiving node 3 includes a SIM (subscriber identify module) card for accessing a mobile communication network incorporating the mobile packet network 100, the decoder 35 may be provided within the SIM card.

Fig. 7 is a block diagram illustrating an exemplary structure of the video distribution apparatus 6. The video distribution apparatus 6 uses an imaging device 61, and an encoder 62 as the data distribution module 44.

The imaging device 61 captures and provides images for the encoder 62, and the encoder 62 encodes the images received from the imaging device 61. The shooting direction and zoom of the imaging device 61 can be controlled in response to instructions from the receiving node 3 after establishing the peer-to-peer connection between the receiving node 3 and the video distribution apparatus 6.

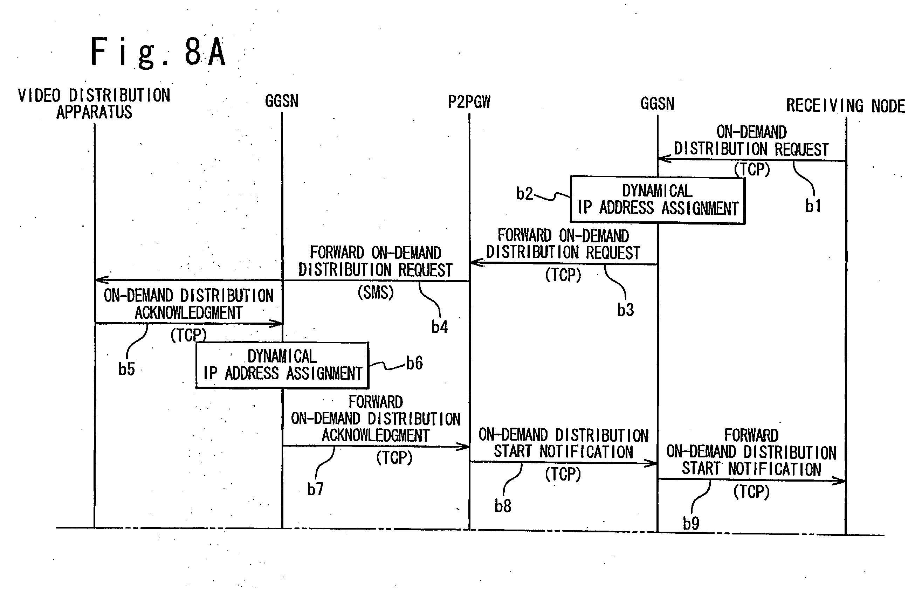

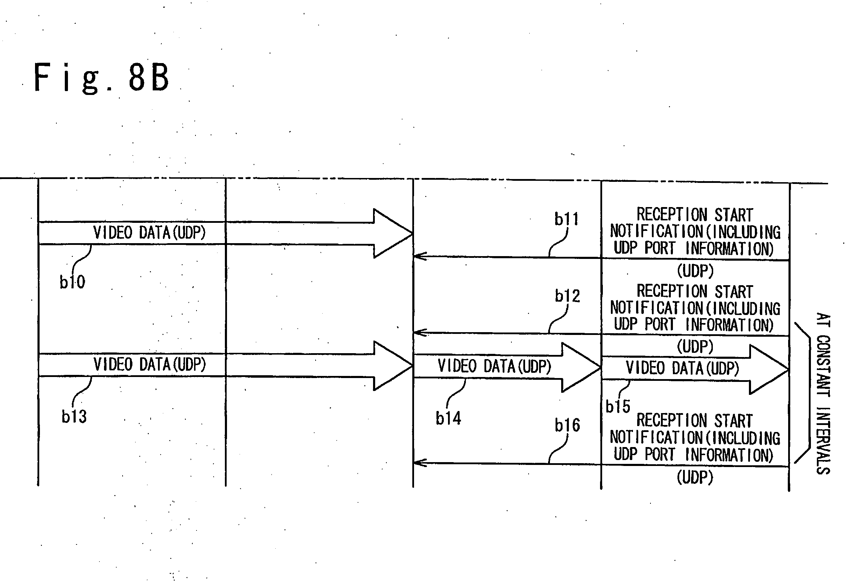

Fig. 8 is a sequence chart illustrating an exemplary operation of the video distribution system in this embodiment. The operation shown in Fig. 8 is implemented through executing the computer programs stored in the recording media 14, and 46 by the peer-to-peer gateway 5 and the video distribution apparatus 6.

The operation of the video distribution system involves establishing a peer-to-peer connection between the receiving node 3 and the video distribution apparatus 6 through the server 1 in response to a request issued by the receiving node 3; the established peer-to-peer connection is used for video distribution from the video distribution apparatus 6 to the receiving node 3.

In order to initiate video distribution from the video distribution apparatus 6 to the receiving node 3, at Step b1, the receiving node 3 transmits an on-demand distribution request to the peer-to-peer gateway 5 through the mobile packet network 100 and the GGSN 2, after the telephone number registration, and the user_ authentication. TCP is used for transmitting the on-demand distribution request. The destination identification of the on-demand distribution request is achieved by using the global IP address assigned to the peer-to-peer gateway 5; it should be noted that the global IP address is previously assigned to the peer-to-peer gateway 5. The GGSN 2, which transfers the on-demand distribution request to the peer-to-peer gateway 5 at Step b3, dynamically assigns an IP address to the receiving node 3 at Step b2. The IP address assigned to the receiving node 3 is used for identification of the destination of a response to the on-demand distribution request.

Upon receiving the on-demand distribution_ request from the receiving node 3, the peer-to-peer gateway 5 retrieves the registered telephone number associated with the video distribution apparatus 6 from the distribution management module 12. The SMS client 13 within the peer-to-peer gateway 5 then encapsulates the distribution request into an SMS message, and sends the SMS message to the video distribution apparatus 6 using the retrieved telephone number at Step a7; the destination of the SMS message (that is, the video distribution apparatus 6) is identified by the associated telephone number. The content of the SMS message includes the global IP address of the peer-to-peer gateway 5.

Upon receiving the SMS message from the peer-to-peer gateway 5, the video distribution apparatus 6 stores the received SMS message into a file prepared in a storage device, and analyses the SMS message using the SMS analyzer module 42 to obtain the encapsulated distribution request and the global IP address of the peer-to-peer gateway 5.

The video distribution apparatus 6 then sends an on-demand distribution acknowledgement to the peer-to-peer gateway 5 using the global IP address as the destination identifier at Steps b5 to b7. In the meantime, the GGSN 2 dynamically assigns an IP address to the video distribution apparatus 6 in response to a connection request from the video distribution apparatus 6 at Step b6. The transmission of the on-demand_ distribution acknowledgement is achieved by using TCP.

In response to the distribution acknowledgment received from the video distribution apparatus 6, the peer-to-peer gateway 5 sends a distribution start notification to the receiving node 3 using TCP at Steps b8 and b9. After sending the distribution start_ notification, the data transfer module 11 within the peer-to-peer gateway 5 then starts to transfer the data received from the video distribution apparatus 6 to the receiving node 3 using the information stored in the distribution management module 12. This achieves a peer-to-peer connection between the receiving node 3 and the video distribution apparatus 6 through the peer-to-peer gateway 5 over the mobile packet network 100.

After establishing the peer-to-peer connection, the video distribution apparatus 6 transmits video data using UDP with the IP address of the receiving node 3 used as the destination identifier at Steps b10 and b13.

In the meantime, the receiving node 3 repeatedly sends reception start notifications to the peer-to-peer gateway 5 using UDP at Steps b11, and b12.

The reception start notifications include UDP port information representative of the UDP port used for the video distribution between the video distribution apparatus 6 and the receiving node 3. This is quite important for achieving real-time video distribution. Transmitting the UDP port information to the peer-to-peer gateway 5 through the GGSN 2 allows the GGSN 2 to_ acknowledge the data transfer using UDP between the video distribution apparatus 6 and the receiving node 3; if not accessed from the receiving node 3, the GGSN 2 would close the UDP port used for the video distribution, and thereby block the video distribution.

Until the receiving node 3 starts to receive the video data from the video distribution apparatus 6, the receiving node 3 repeatedly transmits the reception start notifications. Time intervals at which the receiving node 3 transmits the reception start notifications are relatively short.

This procedure allows the peer-to-peer gateway 5 to transfer the video data from the video distribution apparatus 6 to the receiving node 3 through the UDP port notified by the receiving node 3 using the reception start notifications. It should be noted that the peer-to-peer gateway 5 discards the video data_ received from the video distribution apparatus 6 before receiving the reception start notification from the receiving node 3.

After starting to receive the video data from the video distribution apparatus 6, the receiving node 3 continues to repeatedly send the reception start notifications. This is because the GGSN 2 may automatically close the UDP port if not accessed from the receiving node 3. Sending the reception start notifications allows the UDP port to be kept open. The time intervals at which the receiving node 3 sends the reception start notifications after starting to receive the video data are relatively long compared to those before receiving the video data.

As thus described, the video distribution system in this embodiment effectively achieves real-time video distribution over the mobile packet network 100 without a dedicated communication network. This is advantageous for reducing the cost. Such feature is preferable for video streaming and remote visual monitoring using PDAs and cellular phones.

Additionally, the video distribution system in this embodiment allows the video distribution using UDP from the video distribution apparatus 6 to the receiving node 3. This effectively improves the data transmission rate, and thereby promotes the real-time video transfer.

Although the invention has been described in its preferred form with a certain degree of particularity, it is understood that the present disclosure of the preferred form has been changed in the details of construction and the combination and arrangement of parts may be resorted to without departing from the scope of the invention as hereinafter claimed.

Especially, it should be noted that the present invention may be applied to one-way data distribution systems, including a system for data distribution from a mobile packet network to the Internet, or a system for data distribution from the Internet to a mobile packet network. The present invention may be used for concurrent data distribution for multiple receiving nodes, or for data distribution between different mobile packet networks.

Additionally, it should be noted that the present invention may be applied to data distribution of static image data, audio data, measured data obtained from measuring instruments, or text data.

Furthermore, those skilled in the art would appreciate that other methods, including the MMS (multimedia Messaging Service) and e-mail service, may be used in place of SMS for establishing the peer-to-peer connection between the reception node 3 and the data distribution server 4 (or the video distribution server 6).

## Claims

1. A data distribution system comprising a server (1, 5), a data distribution apparatus (4, 6) (4, 6), and a receiving node (3), which are connected one another through a mobile packet network (100), in which system UDP (user datagram protocol) is used for data distribution from said data distribution apparatus (4, 6) to said receiving node (3),
**characterized in that** said receiving node (3) includes means for sending UDP port information to said server (1, 5), when a connection is established between said receiving node (3) and said data distribution apparatus (4, 6) through said server (1, 5) over said mobile packet network (100), said UDP port information being representative of a UDP port used for said data distribution, and
that said server (1, 5) includes means for performing real-time transfer of data received from said data distribution apparatus (4, 6) to said receiving node (3) using said UDP port.

2. The data distribution system according to claim 1, wherein said receiving node (3) repeatedly sends said UDP port information to said server (1, 5) until said receiving node (3) receives said data from said data distribution apparatus (4, 6).

3. The data distribution system according to any one of claims 1 and 2, wherein said receiving node (3) repeatedly sends said UDP port information to said server (1, 5) after starting to receive said data from said data distribution apparatus (4, 6).

4. The data distribution system according to any one of claims 1 to 3, wherein said server (1, 5) includes means for forwarding a distribution request from said receiving node (3) to said data distribution apparatus (4, 6) through a message transfer medium which is designed to transfer a message using a telephone number of said data distribution apparatus (4, 6) as a destination identifier, and
wherein said server (1, 5) provides a connection between said data distribution apparatus (4, 6) and said receiving node (3), and thereby achieves real-time distribution of data from said data distribution apparatus (4, 6) to said receiving node (3) therethrough in response to said distribution request.

5. The data distribution system according to claim 4, wherein said message transfer medium is selected out of a group consisting of SMS (short message service), MMS (multimedia messaging service), and an e-mail service..

6. The data distribution system according to any one of claims 4 and 5, wherein said data distribution apparatus (4, 6) includes means for analyzing said message to obtain address information associated with said server (1, 5), and
wherein said data distribution apparatus (4, 6) establishes a connection to said server (1, 5) through said mobile packet network (100) using said address information.

7. The data distribution system according to claim 6, wherein said address information includes a global IP address of said server (1, 5).

8. The data distribution system according to any one of claims 1 to 7, wherein user authentication of a user of said receiving node (3) is achieved by using a user ID and a password previously provided for said receiving node (3) by said server (1, 5).

9. The data distribution system according to any one of claims 1 to 8, wherein said data distribution apparatus (4, 6) provides said receiving node (3) with data selected out of a group consisting of video data, still image data, audio data, measured data, and text data.

10. A server (1, 5) for data distribution using UDP from a data distribution apparatus (4, 6) to a receiving node (3) over a mobile packet network (100), **characterized by** comprising:
means for receiving UDP port information from said receiving node (3), said UDP port information being representative of a UDP port used for said data distribution apparatus (4, 6); and
means for performing real-time transfer of data received from said data distribution apparatus (4, 6) to said receiving node (3) using said UDP port, when a connection is established between said data distribution apparatus (4, 6) and said receiving node (3) through said server (1, 5) over said mobile packet network (100).

11. The server (1, 5) according to claim 10, further comprising:
means for forwarding a distribution request from a receiving node (3) to a data distribution apparatus (4, 6) through a message transfer medium which is designed to transfer a message including said distribution request using a telephone number of said data distribution apparatus (4, 6) as a destination identifier.

12. The server (1, 5) according to claim 11, wherein said message transfer medium is selected out of a group consisting of SMS (short message service), MMS (multimedia messaging service), and an e-mail service

13. The server (1, 5) according to any one of claims 11 and 12, further comprising means for encapsulating address information associated with said server (1, 5) into said message.

14. The server (1, 5) according to claim 13, wherein said address information includes a global IP address of said server (1, 5).

15. The server (1, 5) according to any one of claims 10 to 14, further comprising:
means for providing a user ID and a password for said receiving node (3); and
means for performing user authentication using said user ID and said password.

16. The server (1, 5) according to any one of claims 10 to 15, wherein said data distribution apparatus (4, 6) provides said receiving node (3) with data selected out of a group consisting of video data, still image data, audio data, measured data, and text data.

17. A receiving node (3) for receiving data which is real-time transmitted using UDP from a data distribution apparatus (4, 6) through a server (1, 5) over a mobile packet network (100),
**characterized by** comprising:
UDP informing means for sending UDP port information to said server (1, 5), when a connection through said server (1, 5) between said data distribution apparatus (4, 6) and said receiving node (3) is established over said mobile packet network (100), said UDP port information being representative of a UDP port used for real-time transmitting of said data.

18. The receiving node (3) according to claim 17, wherein said UDP informing means repeatedly sends said UDP port information to said server (1, 5) until said receiving node (3) receives said data from said data distribution apparatus (4, 6).

19. The receiving node (3) according to any one of claims 17 and 18, wherein said receiving node (3) repeatedly sends said UDP port information to said server (1, 5) after starting to receive said data from said data distribution apparatus (4, 6).

20. The receiving node (3) according to any one of claims 17 to 19, wherein said data distribution apparatus (4, 6) provides said receiving node (3) with data selected out of a group consisting of video data, still image data, audio data, measured data, and text data.

21. A method for data distribution using UDP from a data distribution apparatus (4, 6) to a receiving node (3) over a mobile packet network (100), **characterized by** comprising:
establishing a connection from said data distribution apparatus (4, 6) to said receiving node (3) through a server (1, 5); and
transmitting UDP port information to said server (1, 5) in response to said connection being established, said UDP port information being representative of a UPD port used for said data distribution; and
performing real-time data distribution from said data distribution apparatus (4, 6) to said receiving node (3) using said UDP port.

22. The method according to claim 21, wherein said UDP port information is repeatedly transmitted to said server (1, 5) until said receiving node (3) receives data from said data distribution apparatus (4, 6).

23. The method according to any one of claims 21 and 22, wherein said UDP port information is repeatedly transmitted to said server (1, 5) after said receiving node (3) starts to receive data from said data distribution apparatus (4, 6).

24. The method according to any one of claims 21 to 23, further comprising:
forwarding a distribution request by said server (1, 5) from said receiving node (3) to said data distribution apparatus (4, 6) through a message transfer medium which uses a telephone number of said data distribution apparatus (4, 6) as a destination identifier,
wherein said performing said real-time data distribution is implemented in response to said distribution request being received by said data distribution apparatus (4, 6).

25. The method according to claim 24, wherein said message transfer medium is selected out of a group consisting of SMS (short message service), MMS (multimedia messaging service), and an e-mail service.

26. The method according to any one of claims 24 and 25, further comprising:
analyzing said message by said data distribution apparatus (4, 6) to obtain address information associated with said server (1, 5),
wherein said data distribution apparatus (4, 6) establishes a connection with said server (1, 5) over said mobile packet network (100) using said address information.

27. The method according to claim 26, wherein said address information includes a global IP address of said server (1, 5).

28. The method according to any one of claims 21 to 27, further comprising:
providing a user ID and a password for said receiving node (3) by said server (1, 5); and
performing user authentication of a user of said receiving node (3) with said user ID and said password.

29. The method according to any one of claims 21 to 28, wherein said data distribution apparatus (4, 6) provides said receiving node (3) with data selected out of a group consisting of video data, still image data, audio data, measured data, and text data.

30. A computer readable medium recording a program for instructing a server (1, 5) used for data distribution using UDP between a data distribution apparatus (4, 6) and a receiving node (3) over a mobile packet network (100) to implement the steps of:
receiving UDP port information from said receiving node (3), said UDP port information being representative of a UDP port used for said data distribution apparatus (4, 6),
performing real-time transfer of data received from said data distribution apparatus (4, 6) to said receiving node (3) using said UDP port, when a connection is established between said data distribution apparatus (4, 6) and said receiving node (3) through said server (1, 5) over said mobile packet network (100).

31. A computer readable medium recording a program for instructing a receiving node (3) receiving data real-time transmitted using UDP from a data distribution apparatus (4, 6) through a server (1, 5) over a mobile packet network (100), to implement the step of:
sending UDP port information to said server (1, 5), when a connection through said server (1, 5) between said data distribution apparatus (4, 6) and said receiving node (3) is established over said mobile packet network (100), said UDP port information being representative of a UDP port used for real-time transmitting of said data.
